# EUROPEAN PATENT SPECIFICATION

(11) **EP 1 830 492 B1**
(45) Date of publication and mention of the grant of the patent: **06.08.2014**
(21) Application number: 04801153.0
(22) Date of filing: 01.12.2004
(51) Int. Cl.: H04J 14/02, H04B 10/03

(54) **RECOVERING METHOD IN A COMPLEX OPTICAL NETWORK**
WIEDERHERSTELLUNGSVERFAHREN IN EINEM KOMPLEXEN OPTISCHEN NETZWERK
PROCEDE DE RECUPERATION DANS UN RESEAU OPTIQUE COMPLEXE

(43) Date of publication of application: 05.09.2007
(73) Proprietor: ZTE Corporation, Shenzhen City, Guangdong Province 518057 (CN)
(72) Inventor: SUN, Desheng, Nanshan District, Shenzhen City, Guangdong Province 518057 (CN)
(74) Representative: Zerbi, Guido Maria
(86) International application number: PCT/CN2004/001396
(87) International publication number: WO 2006/058458

(56) References cited:
- CN-A- 1 392 686
- CN-A- 1 423 876
- US-B1- 6 292 464
- US-B1- 6 430 150
- US-B1- 6 430 150
- ZHENG J ET AL: "Dynamic lightpath restoration based on bidirectional initiation for wavelength-routed WDM networks" IEE PROCEEDINGS : COMMUNICATIONS, INSTITUTION OF ELECTRICAL ENGINEERS, GB, vol. 150, no. 6, 10 December 2003 (2003-12-10), pages 409-413, XP006024393 ISSN: 1350-2425
- XI YANG ET AL: "Inter-domain dynamic routing in multi-layer optical transport networks" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 5, 1 December 2003 (2003-12-01), pages 2623-2627, XP010677826 ISBN: 978-0-7803-7974-9

## Description

### Technical Field

The present invention relates to the optical transport field, particularly to a recovering method in a complex optical transport network.

### Background Art

Optical transport network, such as WDM (wavelength-division multiplexing), SDH (synchronous digital hierarchy) or SONET (synchronous optical network) transport network, has been widely used in telecommunication field. The self-healing ability is an important feature of optical transport network. The proposal of International Telecommunication Union numbered ITU-TG..841 *"Classification and Characteristic of Protection Mechanism for SDH Network"* has detailed description on the self-healing ability of SDH/SONET optical transport network. The protecting methods of two-fiber/four-fiber bidirectional multiplex section shared protection ring and 1+1/1:N linear multiplex section link recommended in the proposal can protect the loop network and chain network well, but are not suitable for complex networks, such as mesh network. Although the method of 1+1 route protection can be applied to complex networks (such as mesh network), it can only be locally used since it occupies a lot of resources.

Predetermined route recovery and dynamic route recovery are widely accepted recovery methods in complex networks such as mesh network.

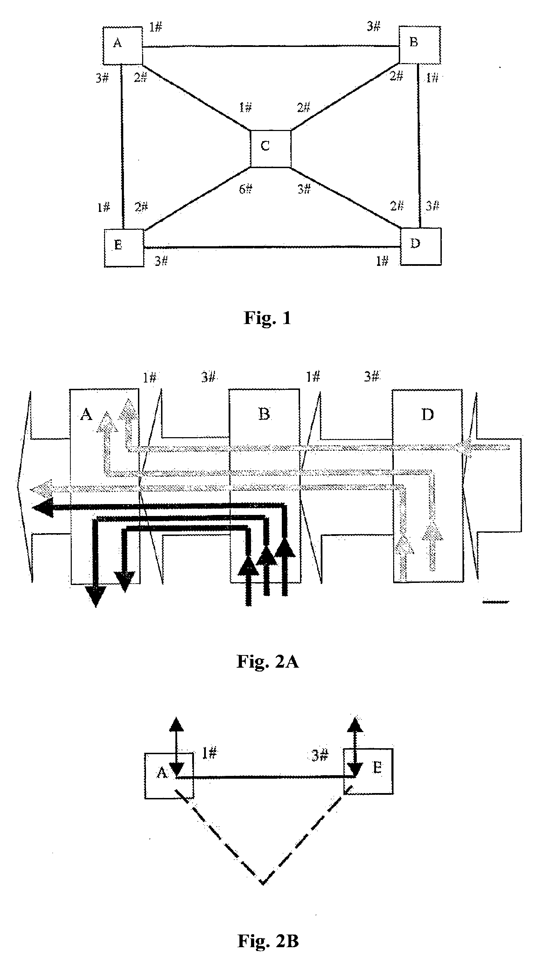

In the predetermined route recovery method, the system predetermines a standby route for each traffic time slot, and each network element in the network stores all the associated standby route information. The standby route can exist as a virtual route or an actual traffic route, with the former needing communication among network elements during the recovery process so as to realize the switch from virtual route to actual traffic route. Compared with the virtual route, the actual traffic route has higher efficiency but occupies more network resources. No matter which form it takes, the predetermined route recovery method needs to store all the standby route information, which means a large amount of information needs to be stored. And when the network has multi-failures, namely, both the original traffic route and the standby route are failed, and traffic recovery probability of the predetermined route recovery method is low. For example, in a complex network as shown in Figure 1, if the standby route of traffic between network elements A and C is A-B-C, and the standby route between E and C is E-A-C, when there is a fault in the section between A and C, the standby route E-A-C between E and C will also fail. At this time, if the section between E and C also fails, then the traffic between E and C will not be recovered.

In the dynamic route recovery method, when the network has a fault, certain network elements in the network will dynamically complete the establishment of standby route through negotiation based on the fault information and network resources. Generally, the network element detecting the fault initiates a request, reserves available resources by repeatedly exchanging information with other network elements in the network, and eventually obtains a route that can recover the traffic. Although the success rate of the dynamic route recovery method is relatively high, it is complicated to perform and hard to realize, so it has a low efficiency. Taking Figure 1 as an example, it describes an implementation of the dynamic routing recovery method. The section between network elements A and C has a fault, and when network element A detects that there is a fault in 2# direction, it will sent a request to the adjacent network element to build a standby route. For instance, network element A sends request to network element B first, after B receives the request, it will search its own resources; if the backup resources are enough, it will transfer the request to the direction of network element C, who receives the request and confirms the request if there are enough resources between C and B, and responses the request to network element B, who transfers the request response to network element A. After the whole request and response are completed, network elements A, B and C interleaves their traffics and the standby route is built. If there are no enough resources, for instance, if network element B has no required resources in other directions, such as B-C, B-D, and so on, network element B responds failure response to A. After receiving the failure response, network element A will send a request again to network elements other than B. It can be seen from the above description that the dynamic method can not ensure efficiency.

Patent No. US6430150, "Communication node, restoration method and communication network" offers a recovery method, whose main steps are: 1. a network element detects alarms and is responsible to broadcast the failure information to other network elements in the network; 2. each network element calculates an alternative route based on the received alarm information, locally stored physical topology and logical topology information; 3. each network element performs time slot cross connection based on the alternative route. Although this method has the features of the two conventional methods above, it has fatal deficiencies. Applying said method of the invention, no matter what kind of algorithm each network element takes, consistency of calculated results can not be guaranteed. Yet the route for recovering traffic can not be obtained unless a consistent result is calculated by every network element. For example, in the complex network shown in Figure 1, when there is a route failure between network elements A and network element C, they can not get consistent results based on the method described in the prior patent document. If network element A chooses the standby route A-B-C, while C chooses C-E-A, then the recovery fails.

### Summary of the Invention

The object of the present invention is to provide a recovery method with high efficiency, small amount of storage and capability of multi-fault recovery in a complex optical transport network, to solve the problems of large amount of required storage, not having the capability of multi-fault recovery of the conventional predetermined routing method, low efficiency of conventional dynamic routing method as well as the defects existing in the previous patent methods.

In order to achieve the object, technical scheme applied in the present invention is:

A recovery method in a complex optical transport network, which uses a background system to pre-determine a standby route for according resource group of each network element in the optical network, dynamically updates the standby route of each network element according to the operation condition of the network, and establishing the standby route by signalling between network element systems on the standby route when the route is in trouble.

Preferably, this method includes the steps of: predetermining a standby route for each network element in the optical transport network by said background system; transmitting standby route information of each network element to the associated network element by said background system; detecting operation condition of the network and updating the standby route in real time by said background system; detecting the related change within the optical transport network, and performing the operation related to the standby route based on the change by each network element system.

Preferably, said step of predetermining further includes: dividing the working resources of each optical port of each network element into different working resource groups by said background system; searching standby route for each divided work group by said background system; searching unassigned resources of each network element in each standby route above and determining a standby route for recovering each related work group by said background system; performing pre-cross connection by each network element in each determined standby route above.

Preferably, said step of dividing working resource groups includes: grouping the traffics coming from the adjacent network elements in every optical port of each network elements into one working group by said background system; grouping the traffics coming from the non-adjacent network elements in every optical port of each network element into another working group by said background system.

Preferably, said step of searching standby route further includes: using routing algorithm to calculate a standby route for each said divided work group by said background system; if there is no available route, the size of the work group will be adjusted.

Preferably, said routing algorithm is Dijkstra algorithm.

Preferably, said step of adjusting further includes: decomposing the working group into two working resource groups.

Preferably, said step of searching further includes: searching unassigned resources of each network element in each foregoing standby route by said background system; and determining whether the unassigned resources of each network element are enough for the working group of the standby route to recover; if the resources are enough, the standby route is determined, otherwise another route is to be searched.

Preferably, said step of searching still includes: making the unassigned resources of each network element in the standby route up to a protection group by said background system; said step of handing down still includes: handing down assignment information of work group of each network element and protection group to corresponding network elements.

Preferably, said step of pre-cross connection still includes: assigning an ID for each said pre-cross connection; said step of handing down also includes: handing down the pre-cross connection ID implemented by each foregoing network element to each associated network element.

Preferably, said step of real-time detecting still includes: detecting the operating condition of the network in real time, determining standby route of each network element again and handing down the standby route to the associated network element by said background system.

Preferably, said change of the network includes: increasing or decreasing network elements in the network; increasing, decreasing or modifying connection between network elements in the network; increasing, decreasing or modifying traffic configuration in the network; fault in optical route.

Preferably, said change information of the network comes from network management system.

Preferably, said detecting related change within the optical transport network by each network element system is that each network element system detects change of route alarm in the receiving direction of one optical port or change of received protocol signaling.

Preferably, said operation related to the standby route includes: detecting route alarm in the receiving direction of each optical port in real time by each network element system; performing pre-cross connection when a network element system detects an alarm change in one of its optical ports and the change is from no alarm to having alarm; canceling the standby route if said change is from having alarm to no alarm.

Preferably, said step of pre-cross connection further includes: obtaining the stored standby route information by the foregoing failed network element system having an alarm; obtaining information of the next adjacent network element from the standby route information by the failed network element system; sending protocol signaling to the next network element to tell it to operate pre-cross connection by the failed network element system; after the pre-cross connection between said failed network element system and the next network element succeeds, the failed network element system operates switch.

Preferably, the above-mentioned protocol signaling includes tables of each pre-cross connection and its corresponding flag bit; said step of sending protocol signaling further includes: setting the flag bit corresponding to the ID of the next network element in the above-mentioned protocol signaling as a mark of performing pre-cross connection by the foregoing failed network element system.

Preferably, said step of canceling the standby route further includes: obtaining the stored standby route information by the foregoing recovery network element system whose alarm disappears; getting information of the adjacent next network element from the standby route information by said recovery network element system; sending protocol signaling to the next network element to tell it to cancel pre-cross connection by said recovery network element system; canceling the switch by the recovery network element system after the pre-cross connection between the recovery network element system and the foregoing next network element succeeds.

Preferably, the above-mentioned protocol signaling includes tables of each pre-cross connection ID and its corresponding flag bit; said step of sending protocol signaling further includes: setting the flag bit corresponding to the pre-cross connection ID of the next network element in the above-mentioned protocol signaling as a mark of canceling pre-cross connection by the foregoing recovery network element system.

Preferably, said operation related to standby route includes: detecting the change of protocol signaling received at each optical port in real time by each network element system; performing pre-cross connection when a network element system detects a change in protocol signaling received at one of the optical ports and the change is from no pre-cross connection indication to having pre-cross connection indication; canceling the standby route if the change is from having pre-cross connection indication to canceling pre-cross connection indication.

Preferably, said step of pre-cross connection further includes: obtaining the stored standby route information by the above-mentioned network element system having pre-cross connection indication; getting the information of the adjacent next network element from the standby route information by the network element system; sending protocol signaling to the next network element to tell it to operate pre-cross connection when the network element system is not the end network element in the foregoing standby route by the network element system; establishing the pre-cross connection by the network element system.

Preferably, the above-mentioned protocol signaling includes tables of flag bits of each pre-cross connection ID and its corresponding flag bit; said step of sending protocol signaling further includes: setting the flag bit corresponding to the ID of pre-cross connection of the next network element in the above-mentioned protocol signaling as a mark of performing pre-cross connection by the foregoing recovery network element system.

Preferably, said step of canceling the standby route further includes: obtaining the stored standby route information by the foregoing network element system with pre-cross connection indication disappearing; getting the information of the adjacent next network element from the standby route information by the network element system; sending protocol signaling to the next network element to tell it to cancel pre-cross connection by the network element system; canceling the pre-cross connection by the network element system.

Preferably, the above-mentioned protocol signaling includes tables of flag bits of each pre-cross connection ID and its corresponding flag bit; said step of sending protocol signaling further includes: setting the flag bit corresponding to ID of the next pre-cross connection in the above-mentioned protocol signaling as a mark of canceling the pre-cross connection by the foregoing recovery network element system.

Preferably, the method also includes: assigning a route for transportation of protocol signaling between network element systems; said protocol signaling is transported in the route for transportation of protocol signaling between network element systems; Said route for transportation of protocol signaling can be inherent overhead of the transport network, embedded route or special signaling network.

The method provided in the present invention is achieved by background system and network element system. Background system comprehensively considers network resources and topology connection to calculate predetermined route by using the transported resource group as an operational unit and dynamically update the standby route based on the practical conditions. Taking route alarm and signaling receiving as a triggering condition, the network element system transports protocol signaling to build a standby route. Therefore, the method of the present invention can realize a dynamic recovery of a network and enable the network to have the capability of multi-failure recovery.

In addition, compared with other methods, the recovery method in a complex optical transport network offered by the present invention has less working storage in the network element, and only information such as standby route related to the network element, the assignment of working resource and unassigned resource, and pre-cross connection ID is stored. Moreover, since the protocol processing of each network element during traffic recovery is simple, the method of protocol transportation can use many kinds of forms like overhead byte of network, embedded route, and so on, which has a high speed and a good practicability.

### Description of Drawings

It is believed that the above characteristics, advantages and object of the present invention will be better understood from the description of some embodiments thereof with reference to the accompanying drawings.
Figure 1 is an illustration of a complex optical transport network consisting of 5 network elements;
Figure 2A is a schematic drawing of the source of traffics received by network elements in the network shown in Figure 1 in accordance with an embodiment of the present invention;
Figure 2B is a schematic drawing of section WG standby route of the network elements in the network shown in Figure 1 in accordance with an embodiment of the present invention;
Figure 2C is a schematic drawing of node WG standby route of the network elements in the network shown in Figure 1 in accordance with an embodiment of the present invention;
Figure 3 is a schematic drawing of relationship between a background system and a network element system in accordance with an embodiment of the present invention;
Figure 4A is a schematic drawing of protocol signaling in accordance with an embodiment of the present invention;
Figure 4B is a schematic drawing of protocol signaling applying odd check in accordance with another embodiment of the present invention;
Figure 5 is a flow chart of background system processing in accordance with an embodiment of the present invention;
Figure 6 is a flow chart of network element system processing in accordance with an embodiment of the present invention;
Figure 7 is a schematic drawing of part ofWG assignment of network elements A, B, C in the network shown in Figure 1 in accordance with an embodiment of the present invention;
Figure 8 is a schematic drawing of part ofWG, PG assignment of network elements A, B, C in the network shown in Figure 1 in accordance with an embodiment of the present invention;
Figure 9 is a schematic drawing of part of pre-cross connection assignment of network elements A, B, C in the network shown in Figure 1 in accordance with an embodiment of the present invention;
Figure 10A is a schematic drawing of routing before the failure of AC section in the network shown in Figure 1 in accordance with an embodiment of the present invention;
Figure 10B is a schematic drawing of routing renewal after the failure of AC section in the network shown in Figure 1 in accordance with an embodiment of the present invention.

### Specific Embodiments of the Present Invention

Preferred embodiments of the present invention will be described in further detail with reference to the accompanying drawings.

Figure 1 is a schematic drawing of a complex optical transport network consisting of 5 network elements. In this embodiment, the optical transport network shown in Figure 1 is SDH network, and its speed rate is STM-16 (STM: synchronous transport module; Speed rate of STM-16 is 2.5Gbit/s. Fibers with this speed can carry 16 AU4s). 6 AU4s of NO.1∼6 are configured between network elements A and B, A and C, and B and C, and 4 AU4s of NO.7∼10 are configured from A to D via C.

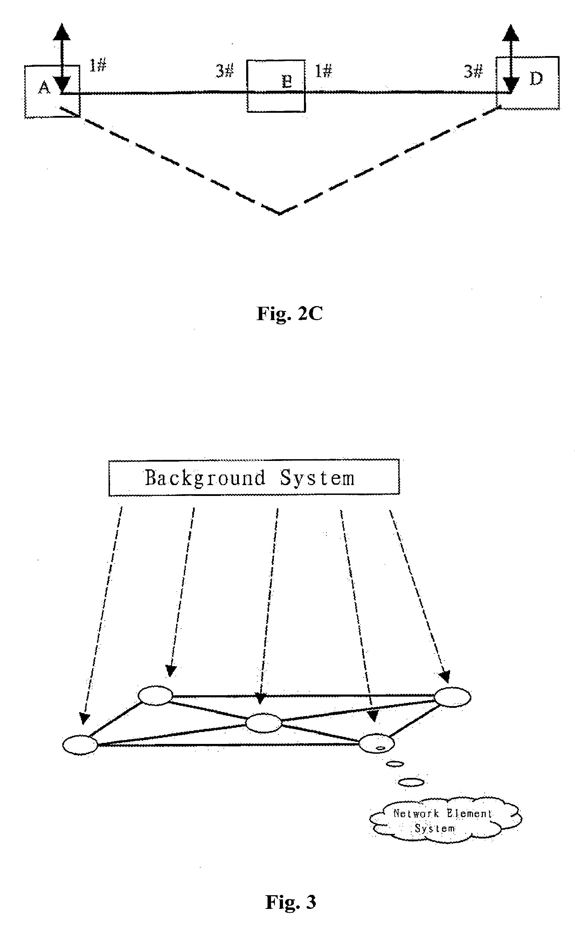

In this embodiment, the complex optical transport network includes two parts: a background system and a network element system. Figure 3 illustrates the relationship between the background system and the network element system in the embodiment. Correspondingly, the recovery method in the complex optical transport network of the embodiment includes technical scheme of the background system and technical scheme of the network element system.

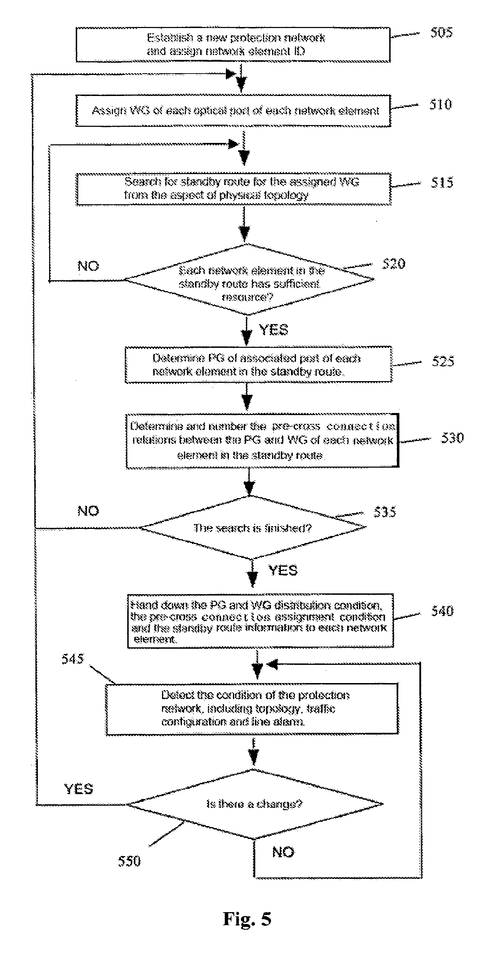

Figure 5 is a flow chart of the background system processing in the embodiment. Taking the processes of determining a network as shown in Figure 1 and determining a standby route of traffic between network elements A and B as examples, operation of the background system is described with reference to the flow chart shown in Figure 5.
1. The background system newly builds a protection network in step 505. The protection network is built based on the condition of the optical transport network. In this embodiment, the protection network comprises 5 network elements A, B, C, D, and E, whose IDs are 1, 2, 3, 4, and 5 respectively. It should be mentioned that different network elements have different IDs in the same protection network.
2. According to the working resource configuration of each network element and fiber connection in the protection group, the background system successively divides a resource group for working resources of each optical port of each network element in step 510. For each optical port receiving signals, the system assigns a resource group for the traffics of the adjacent network elements, and assigns another resource group for the traffics of the non-adjacent network elements (these traffics just pass the adjacent network elements). These groups consisting of working resources are called WG (work group) in this embodiment. The former is called section WG and the latter is called node WG. Different WGs in the same optical port are numbered to distinguish from each other. For example, for the network shown in Figure 1, if distribution of the traffic of network element A in 1# receiving signal optical direction is as shown in Figure 2A, then section WG is assigned to the 3 pieces of traffic with heavy color, and note WG is assigned to the other 3 pieces of traffic with light color.

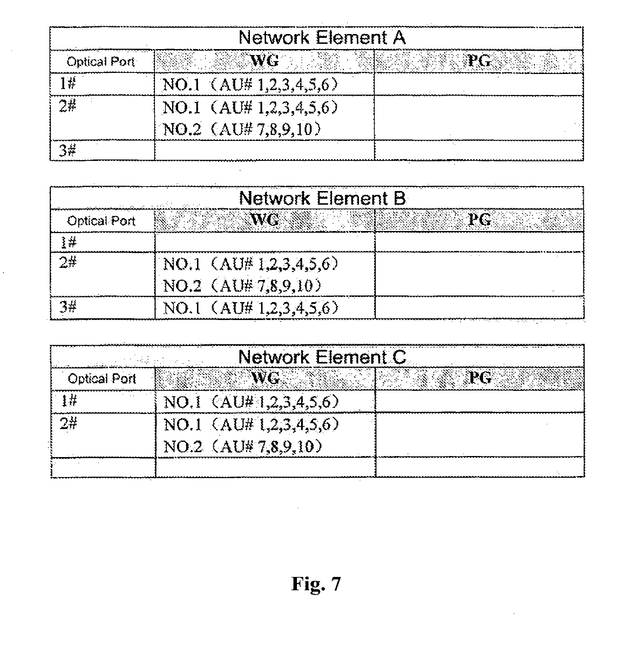

In this embodiment, WG of each network element is determined based on the traffic configuration ofA, B, C, D, E. traffic of A1# Optical port comes from network element B, and is assigned as NO.1 WG. Traffic NO.1∼6 of A1# optical port coming from network element C is assigned as NO.1 WG, and traffic NO.7∼10 coming from network element D is assigned as NO.2 WG. By this means, B1#, C1#, C2# optical ports can also be assigned, and the assignment is as shown in Figure 7.

3. According to physical topology, the system uses routing algorithms such as Dijkstra algorithm to search a standby route for the WG assigned in the 2^{nd} item above in step 515. If there is no available standby route, then returning to the 2^{nd} item to adjust the size of WG, for example, the original WG can be split into two smaller WGs. The start point and end point of the standby route of section WG are two adjacent network elements of the corresponding section. As shown in Figure 2B, the start point of section WG of network element A is network element A, and the end point is network element B. The start point of the standby route of node WG is the same with that of section WG, but the end point is a network element which skips the adjacent network element of the start point. As shown in 2C, the start point of node WG of network element A is network element A, and the end point is network element D. Therefore, the standby route of node WG has the recovery capability after a network element is out of work. For example, when network element B shown in Figure 2 has a fault, although section WG of network element A can not be recovered, the standby route of node WG can still be successfully passed, which has the capability of recovery.

In this embodiment, according to the physical topologies of A, B, C and D, the background system uses Dijkstra routing algorithm to search a standby route for NO.1 WG of A1#. The standby route can be generally determined as A2# -1# C2# -2#B.

4. The background system searches unassigned resources of each network element in the foregoing standby route to determine whether WG assigned in the 2^{nd} item can be recovered or not in step 520. If there are not enough resources, then return to step 515 to search for other stand routes. If there are, the system assigns a PG (Protection Group) to the group consisting of a series of unassigned resources which forms the standby route in step 525. The size ofPG is determined by the size of protected WG. Different WGs, PGs in the same optical port are numbered to distinguish from each other. The standby route comprises of PGs section by section. For example, if the standby route of section between network elements A and B in the network shown in Figure 1 is A-C-B, the standby route is composed of PGs of A-C section and C-B section.

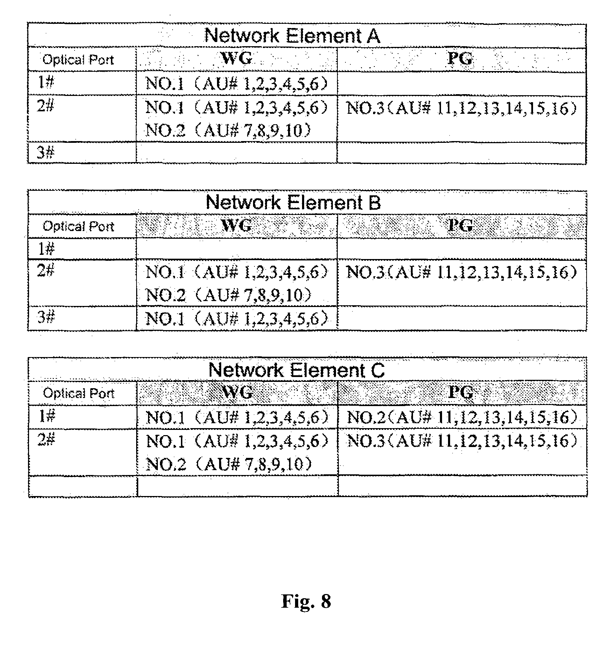

In the embodiment, the background system searches resources of sections between A2#-1# and C2#-2#B, finding out that 6 AU4s of NO.11∼16 of the two sections are available. Therefore, 6 AU4s of NO.1∼16 of A2#, C1#, C2#, B2# are assigned as a PG and numbered. The result is shown in Figure 8.

5. Pre-cross connection is assigned and distributed with ID in step 530. After the standby route is determined, the standby route can not be practically used unless every network element in the standby route is interleaved. Since these crosses connection are not actually operated before the standby route is in operation, they are called pre-crosses connection. Pre-cross connection relationship of the first and final network elements in the standby route is the cross connection between the protected WG and PG, pre-crosses connection of other network elements in the standby route are crosses connection between PGs. The system numbers these pre-crosses connection, and different pre-crosses connection in the same optical port have different IDs. For example, in the standby route A-C-B of section between network elements A and B in the network shown in Figure 1, pre-cross connection of network element A is pre-cross connection between WG in 1# direction and PG in 2# direction, pre-cross connection of network element C is pre-cross connection between PG in 1# direction and PG in 2# direction, and pre-cross connection of network element B is pre-cross connection between WG in 3# direction and PG in 2# direction

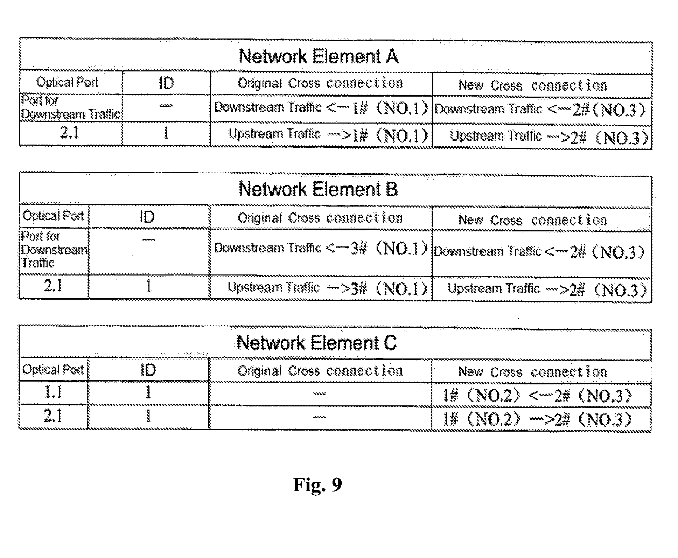

In this embodiment, ID is assigned for the cross connection in the standby route A2# -1# C2# -2#B, as shown in Figure 9. In the table, "original cross connection" is time slot cross connection when network elements are in normal operation, and "new cross connection" is pre-cross connection required for switching to the standby route when a network element is in fault. For A1#, the original cross connection is "downstream traffic port<-1# (NO.1)", the new cross connection is "downstream traffic port<-2# (NO.3)", i.e., each downstream traffic port of network element A switches from NO.1 WG of 1# optical direction to NO.3PG of 2# optical direction for receiving traffics. This is a switch. The network element detecting alarm can find out its "new cross connection" by inquiring the failed WG, therefore, numbers are not needed and they are identified as '-' in the table. For network element C, the connection relationship of PG-PG is assigned and there is no replacement relationship, therefore, there is no original cross connection and it is identified as '-'in the table. When network element completes the similar work, the standby route ofNO.1WG is identified as "A (2#) < -1 (1#) C (2#) < -1 (2#) B" after A1# receives a fiber fault, NO.1WG is identified as 'B (2#) < -1 (1#) C (2#) < -1 (2#) A" after B3# receives a fiber fault.

6. Judgment is made on whether all other optical ports of network elements A, B, C, D and E have finished the above 2^{nd}, 3^{rd}, 4^{th}, 5^{th} items in step 535; if they have, then turn to the 7^{th} item, otherwise to the 2^{nd} item.

7. The background system hands the WG, PG distribution shown in Figure 8, pre-cross connection shown in Figure 9, and standby route information determined in the 5^{th} item down to network elements A, B, C, D and E in step 540. As shown in Figure 8 and Figure 9, network elements A, B, C, D and E only need to store their own WG, PG distribution and pro-cross connection. The standby route information should be stored by network elements which the standby route passes. For example, network elements A, B and C should store standby routes "A (2#) < -1 (1#) C (2#) < -1 (2#) B" and "B (2#) < -1 (1#) C (2#) < -1 (2#) A". Meanwhile, the background system configures one or more overhead bytes carrying protocol signaling for each optical fiber connection and hands them down to the network elements according to the pre-cross connection numbering of each optical port.

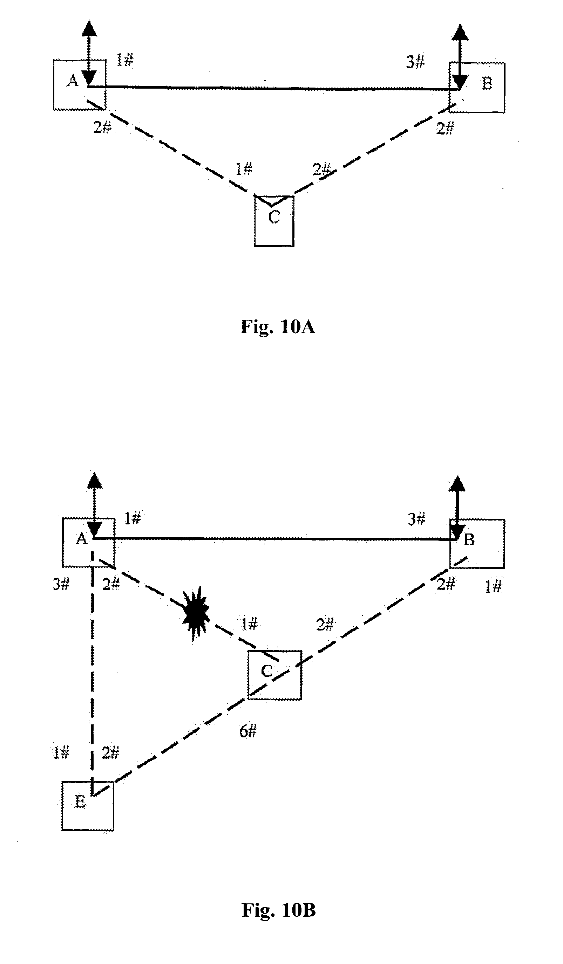

8. The background system dynamically detects condition of the protection network in step 545. Judgment is made on whether there are changes in network in step 550. If there are not, the condition of network is continually detected in step 545. If there are, then go to the 2^{nd} item, namely step 510 to update the standby route of the whole network. For example, if there is a fault in the section between network elements A and C, the standby routes "A < -1 (1#) C< -1 (2#) B" and "B < -1 (2#) C < -1 (2#) A" determined by WG of A1#-3#B are out of effect. After the background system has detected the fault in section between A and C, go to the 2^{nd} item to search routes for NO.1WG of A1# and B3# again. As shown in Figure 10, Figure 10A is the condition of the original standby route, and Figure 10B is the standby route obtained through analysis of the background system again.

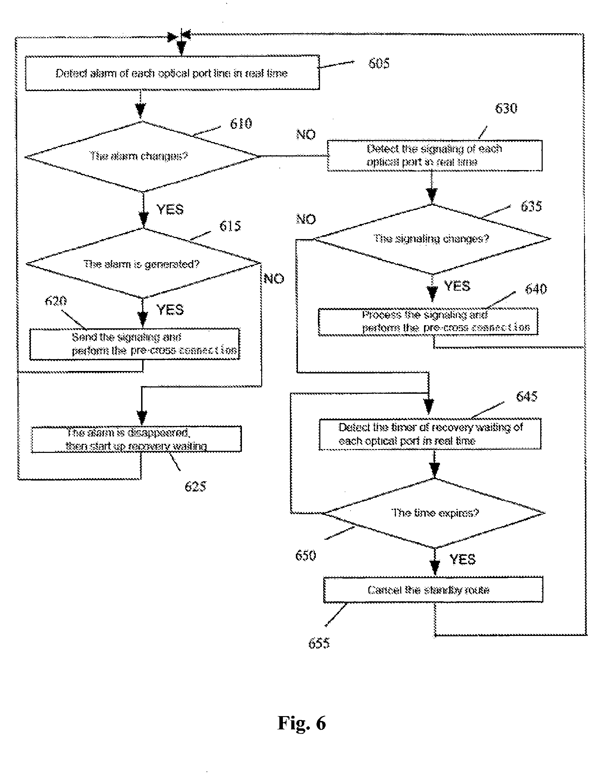

According to the standby route "A (2#) < -1 (1#) C (2#) < -1 (2#) B" of A1#NO.1WG in Figure 1 determined by the background system, taking the fiber fault in 1# receiving direction of network element A, and disappearance of the fault as an example, operation of network element system is described according to the flow chart shown in Figure 6. The following steps are sorted by their orders in the process.

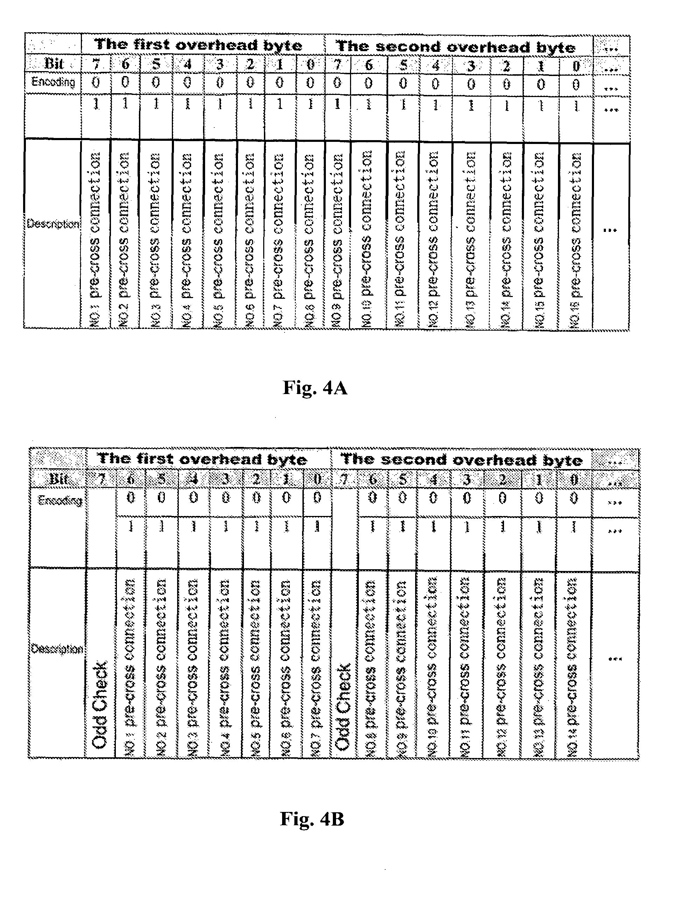

In the embodiment, as shown in Figure 4, network element system prescribes the protocol signaling, which can be carried by some overhead bytes of the system or some bits of an overhead byte. When each bit value is 1, the pre-cross connection of the corresponding ID is established, and the established pre-cross connection will be cancelled when bit value is 0. In Figure 4A odd check bits are added on the basis of Figure 4B.
1. Network elements A, B, C, D and E detect line alarm in receiving direction of each optical port in real time in steps 605 and 610. When some network element detects there is an alarm change, it judges whether the alarm change is from no alarm to having alarm in step 615. If it is, then moves to the following 2^{nd} item, namely step 620; if not, then moves to step 630. In this embodiment, network element A is assumed to have detected there is an alarm in 1# optical port, but there was not previously.
2. Signaling is transported and pre-cross connection is operated in step 620. In this embodiment, according to WG assignment in 1# optical port, firstly, network element A searches the locally stored standby route "A (2#) < -1 (1#) C (2#) < -1 (2#) B" information, learns that the next network element adjacent to this network element is C, the pre-cross connection ID is 1, and the signaling bit corresponding to this ID is 1, signaling "0x40" is created according to Figure 4B and is sent to network element C. After that, according to the pre-cross connection shown in Figure 9 and the original cross connection "downstream traffic<-1# (NO.1)", network element A learns that the new cross connection is "downstream traffic < -2# (NO.3)". According to WG and PG distribution shown in Figure 8, switch is operated, traffics originally received from each WG of failed optical port are now changed to be received from each PG of the optical port indicated by the standby route. Then return to the 1^{st} item, namely step 605.
3. Network elements A, B, C, D, and E detect change of protocol signaling received at each optical port in real time in steps 630 and 635. When there is a signaling change detected by some network element, then turn to the following 4^{th} item, namely, step 640. In this embodiment, network element C is supposed to detect there is a change of protocol signaling in 1# optical port. Bit corresponding to No.1 pre-cross connection of 1 # optical port previously was 0, and now 1.
4. Signaling is processed and pre-cross connection is operated in step 640. In this embodiment, network element C checks the received signaling "0x40", searches a standby route if there is no error and obtains A (2#) < -1 (1#) C (2#) < -1 (2#) B, learning that the next network element adjacent to the present network element is B, the pre-cross connection ID is 1. The signaling bit of this ID is set as 1, a signaling "0x40" is produced according to Figure 4B and sent to B. After that, the locally stored pre-cross connection shown in Figure 9 is searched according to the received signaling bit indication, and the cross connection is "1# (NO.2) < -2# (NO.3)". Then the locally stored WG and PG distribution shown in Figure 8 is searched, and cross connection from 2#NO.3PG to 1#N0.2, namely throughout connection, is operated. Then return to the 1^{st} item, namely step 605.
5. In this embodiment, if network element B detects there is a change of protocol signaling in 1# optical port, and bit corresponding to No. pre-cross connection of 1# optical port was 0, now is 1, then turn to 6^{th} item.
6. Signaling is processed and pre-cross connection is operated in step 640. In this embodiment, network element B checks the received signaling "0x40". If there is no error, searches a standby route and obtains A (2#) < -1 (1#) C (2#) < -1 (2#) B, and learns that the network element is the final network element in the standby path, then there is no need to transport signaling. If the network element is not the final network element in the standby route, the pre-cross connection ID of next network element adjacent to the network element in the standby route is obtained, and the signaling bit of this ID is set as 1 and sent to the next network element. After that, based on the locally stored pre-cross connection shown in Figure 9, the result is "upstream traffic ->2# (NO3)", therefore traffics are sent to NO.3 PG of B2# while the traffics sent to NO.1WG of B3# remain, i.e., bridge connection is implemented. After B finishes the operation, the interrupted traffic of A1#NO.1WG is recovered. Return to the 1^{st} item, namely step 605.
7. Each network element continues to detect line alarm in receiving direction of each optical port in step 506. In this embodiment, network element A is supposed to detect that the alarm disappears in 1# optical port (step 615), then go to 8, namely step 625.
8. The alarm disappears and the waiting for recovery is started up in step 625. In this embodiment, 1# optical port of net element A enters a step of timing of waiting for recovery. Network element A detects the expiration of waiting time for recovery in 1# optical port. According to WG distribution of 1# optical port, network element A searches the stored standby route 'A (2#) < -1 (1#) C (2#) < -1 (2#) B', and learns that the next network element adjacent to the network element is C, the pre-cross connection ID is 1, and the signaling bit corresponding to this ID is 0. Signaling "0x80" is created according to Figure 4B and is sent to network element C. After that, according to the pre-cross connection shown in Figure 9, network element A cancels "downstream traffic < -2# (NO.3)" and recovers "downstream traffic < -1# (NO.1)", i.e., recovers the original cross connection. Then, according to WG and PG distribution shown in Figure 8, switch is operated. Return to the 1^{st} item, namely step 605.
9. In this embodiment, if net element C detects a change in protocol signaling in the 1# optical port, and the corresponding bit of No.1 pre-cross connection of the 1# optical port was 1, and now is 0 (step 635), then go to the 10^{th} item, namely step 645.
10. A timer of waiting for recovery is switched on, and the standby route is cancelled when the waiting time for recovery is expired in steps 645, 650 and 655. In this embodiment, network element C checks the received signaling "0x80", and, if there is no error, searches a standby route and obtains "A (2#) < -1 (1#) C (2#) < -1 (2#) B", learning that the next network element adjacent to the present network element is B, the pre-cross connection ID is 1, and the signaling bit of this ID is set as 0, a signaling "0x80" is produced according to Figure 4B and sent to B. After that, the locally stored pre-cross connection "1#(NO.2)<-2#(NO.3)" shown in Figure 9 is searched according to the received signaling bit indication. Then the locally stored WG and PG distribution shown in Figure 8 is searched, and cross connection from 2#NO.3PG to 1#NO.2, namely throughout connection, is cancelled. Then turn to the 1^{st} item, namely step 605.
11. In this embodiment, if network element B detects a change in protocol signaling in the 2# optical port, and the value of the bit corresponding to No.1 pre-cross connection of the 1# optical port was 1, now is 0 in step 635, then turn to the 12^{th} item, namely 645.
12. A timer of waiting for recovery is switched on, the standby route is cancelled when the waiting time for recovery is expired in steps 645, 650 and 655. In this embodiment, network element B checks the received signaling "0x80", and, if there is no error, searches the standby route and obtains A (2#) < -1 (1#) C (2#) < -1 (2#) B, learning that the network element is the final network element in the standby route, and there is no more need to transport signaling. The locally stored pre-cross connection shown in Figure 9 is searched according to the received signaling bit indication, and traffics sent to NO.3 PG of B2# are stopped, i.e., the bridge connection is cancelled. WG traffic of A1#NO.1 is recovered to the original route. Then turn to the 1^{st} item, namely step 605.

From the above specific embodiments, it can be further understood that said recovery method in a complex optical transport network described in the present invention has advantages, such as small required amount of working storage, dynamic recovery capability and high efficiency.

In addition, the method of the present invention can also be applied in optical network consisting of WDM equipments and SONET network. For WDM network, what is recovered by the method of the present invention is wavelength, for SDH and SONET networks, what is recovered is route.

The recovery method in a complex optical transport network of the present invention is described in detail by some illustrative embodiments, but these embodiments as set forth are not intended to be exhaustive. Many variations and modifications can be made without departing from the scope of the present invention. Therefore, the present invention is not limited to these embodiments, and its scope is only defined by the claims appended hereto.

## Claims

1. A recovery method in a complex optical transport network, comprising:
using a background system to predetermine a standby route for a working resource group of each network element in the network,
dynamically updating the standby route of each network element based on practical operation of the network, and
establishing the standby route by signalling between network element systems on the standby route when a line fault happens.

2. The method of claim 1, comprising the following steps of:
predetermining the standby route for each network element in the optical transport network by said background system;
handing the standby route information of each network element down to each related network element by said background system;
detecting operation conditions of the network in real time and updating the standby route in real time by said background system;
detecting related change in the optical transport network in real time by each network element system, and performing operation associated with the standby route based on said change.

3. The method of claim 2, wherein said step of predetermining the standby route further comprises:
dividing working resource of each optical port of each network element, such as traffic coming from adjacent and non-adjacent network elements, into different working resource group by said background system (510);
searching for the standby route by using a routing algorism, such as Dijkstra algorism, for each working resource group divided above by said background system (515); if there is no available route, adjusting the size of the working resource group, including combining two or more WGs into one, or dividing one WG to two or more WGs;
searching for unassigned resource condition of each network element in each standby route above (520) and determining each standby route for recovering each related working resource group by said background system (525); if the unassigned resource is not sufficient, go back to above step to search for other routes (515);
performing pre-cross connection by each network element in each standby route determined above, including assigning an ID for the said pre-cross connection (530) and handing down the ID to each associated network element (540).

4. The method of claim 3, wherein said searching for unassigned resource step further comprises:
forming the unassigned resource of each network element in each standby route into a protection group by said background system (525), and handing down distribution information of the working resource group and the protection group of each network element to the associated network element (540).

5. The method of claim 2, wherein said real time detecting step further comprises:
detecting operation condition of the network in real time by said background system (545), when a change is detected which can be obtained from a network management system, such as increasing or decreasing the network elements in the network, increasing or decreasing or modifying connections or traffic configuration among the network elements, faults of the optical line, re-determining the standby route of each network element and handing them down to the associated network elements.

6. The method of claim 2, wherein the associated change detected by each said network element system in the optical transport network is the change of line alarm (610) or change of received protocol signaling (635) in receiving direction of one optical port.

7. The method of claim 2, wherein said step of performing operation associated with the standby route further comprises:
detecting line alarm condition in receiving direction of each optical port in real time by each network element system (605);
performing pre-cross connection (620) when a network element system detects an alarm change at one optical port (610), and the alarm change is from no alarm to having alarm (615); canceling the standby route if the alarm change is from having alarm to no alarm (625).

8. The method of claim 7, wherein said step of performing pre-cross connection further comprises:
obtaining the stored standby route information by the above failed network element system with an alarm;
picking up information of a next adjacent network element from the above standby route information by said failed network element system;
sending a protocol signaling including a table of each pre-cross connection ID and its corresponding flag bit to said next network element by said failed network element system, so as to inform said next network element to perform the pre-cross connection;
performing switch by said failed network element system if the pre-cross connection between the failed network element system and said next network element succeeds.

9. The method of claim 7, wherein said step of canceling the standby route further comprises:
obtaining the stored standby route information by a recovery network element system having the alarm disappeared;
obtaining information of a next adjacent network element from the standby route information by the recovery network element system;
sending a protocol signaling including a table of each pre-cross connection ID and its corresponding flag bit to said next network element by the recovery network element system, so as to inform said next network element to cancel the pre-cross connection;
canceling the switch by the recovery network element system after the pre-cross connection between the recovery network element system and the said next network element succeeds.

10. The method of claim 9, wherein said step of sending the protocol signaling further comprises:
setting the flag bit corresponding to the pre-cross connection ID of said next network element in said protocol signaling as a mark of canceling the pre-cross connection by said recovery network element system.

11. The method of claim 2, wherein said step of performing operation associated with the standby route further comprises:
detecting in real time change of a protocol signaling received at each optical port by each network element system (630);
performing pre-cross connection (640) when a network element system detects a change of the protocol signaling in one of the optical ports (635), and the change is from no pre-cross connection indication to having pre-cross connection indication; canceling the standby route (655) if the above alarm change is from having pre-cross connection indication to canceling the pre-cross connection indication.

12. The method of claim 11, wherein said step of performing pre-cross connection further comprises:
obtaining its stored standby route information by said network element system having pre-cross connection indication;
obtaining information of a next adjacent network element from the standby route information by the network element system;
sending a protocol signaling including a table of each pre-cross connection ID and its corresponding flag bit to said next network element to inform it to perform pre-cross connection when the network element system is not the end network element of the standby route;
establishing the pre-cross connection by the network element system.

13. The method of claim 11, wherein said step of canceling the standby route further comprises:
obtaining its stored standby route information by the network element system having the pre-cross connection indication disappeared;
obtaining information of a next adjacent network element from the standby route information by the network element system;
sending a protocol signaling including a table of each pre-cross connection ID and its corresponding flag bit to the next network element to inform it to cancel the pre-cross connection by the network element system;
canceling the pre-cross connection by the network element system.

14. The method of claim 13, wherein said step of sending the protocol signaling further comprises:
setting the flag bit corresponding to the pre-cross connection ID of the next network element in the protocol signaling as a mark of canceling the pre-cross connection by the network element system.

15. The method of any claim of claims 2 to 14, wherein the method further comprises:
assigning transport routes, such as inherent overhead of a transport network, an embedded route or a special signaling network, for the protocol signalings which are transported together through the said transport routes between all the network element systems.

## Patentansprüche

1. Ein Wiederherstellungsverfahren in einem komplexen optischen Transportnetzwerk, das Folgendes beinhaltet:
Verwenden eines Hintergrundsystems, um einen Ersatzweg für eine funktionsfähige Betriebsmittelgruppe jedes Netzwerkelements in dem Netzwerk vorzubestimmen;
dynamisches Aktualisieren des Ersatzwegs jedes Netzwerkelements, basierend auf dem praktischen Betrieb des Netzwerks, und
Festlegen des Ersatzwegs durch Signalisierung zwischen Netzwerkelementsystemen auf dem Ersatzweg, wenn eine Leitungsstörung stattfindet.

2. Verfahren gemäß Anspruch 1, das die folgenden Schritte beinhaltet:
Vorbestimmen des Ersatzwegs für jedes Netzwerkelement in dem optischen Transportnetzwerk durch das Hintergrundsystem;
Weitergeben der Ersatzweginformationen jedes Netzwerkelements an jedes verwandte Netzwerkelement durch das Hintergrundsystem;
Erkennen von Betriebsbedingungen des Netzwerks in Echtzeit und Aktualisieren des Ersatzwegs in Echtzeit durch das Hintergrundsystem;
Erkennen von verwandter Änderung in dem optischen Transportnetzwerk in Echtzeit durch jedes Netzwerkelementsystem, und Durchführen des zu dem Ersatzweg zugehörigen Betriebs basierend auf der Änderung.

3. Verfahren gemäß Anspruch 2, wobei der Schritt des Vorbestimmens des Ersatzwegs ferner Folgendes beinhaltet:
Teilen des funktionsfähigen Betriebsmittels jedes optischen Anschlusses jedes Netzwerkelements, wie etwa von benachbarten und nicht benachbarten Netzwerkelementen kommenden Verkehr, in verschiedene funktionsfähige Betriebsmittelgruppen durch das Hintergrundsystem (510);
Suchen nach dem Ersatzweg durch Verwendung eines Leitwegalgorismus, wie etwa einem Dijkstra-Algorismus, für jede funktionsfähige Betriebsmittelgruppe, die oben durch das Hintergrundsystem (515) geteilt wird; wenn es keinen verfügbaren Weg gibt, Anpassen der Größe der funktionsfähigen Betriebsmittelgruppe, einschließlich des Kombinierens von zwei oder mehreren AGs in eine, oder Teilen einer AG in zwei oder mehr AGs;
Suchen nach dem nicht zugeordneten Betriebsmittelzustand jedes Netzwerkelements in jedem Ersatzweg oben (520) und Bestimmen jedes Ersatzwegs zum Wiederherstellen jeder verwandten funktionsfähigen Betriebsmittelgruppe durch das Hintergrundsystem (525); wenn das nicht zugeordnete Betriebsmittel nicht ausreichend ist, Zurückgehen zum obigen Schritt, um nach anderen Wegen (515) zu suchen; Durchführen einer Vor-Querverbindung durch jedes Netzwerkelement in jedem oben bestimmten Ersatzweg einschließlich des Zuordnens einer ID für die Vor-Querverbindung (530) und des Weitergebens der ID an jedes zugehörige Netzwerkelement (540).

4. Verfahren gemäß Anspruch 3, wobei das Suchen nach dem nicht zugeordneten Betriebsmittelschritt ferner Folgendes beinhaltet:
Bilden des nicht zugeordneten Betriebsmittels jedes Netzwerkelements in jedem Ersatzweg in eine Schutzgruppe durch das Hintergrundsystem (525) und Weitergeben der Verteilungsinformationen der funktionsfähigen Betriebsmittelgruppe und der Schutzgruppe jedes Netzwerkelements an das zugehörige Netzwerkelement (540).

5. Verfahren gemäß Anspruch 2, wobei der Echtzeiterkennungsschritt ferner Folgendes beinhaltet:
Erkennen des Betriebszustands des Netzwerks in Echtzeit durch das Hintergrundsystem (545), wenn eine Änderung erkannt wird, die von einem Netzwerkverwaltungssystem erhalten werden kann, wie etwa das Erhöhen oder Verringern der Netzwerkelemente in dem Netzwerk, Erhöhen oder Verringern oder Modifizieren von Verbindungen oder Verkehrskonfiguration unter den Netzwerkelementen, Fehlern der optischen Leitung, erneutes Bestimmen des Ersatzwegs jedes Netzwerkelements und deren Weitergeben an die zugehörigen Netzwerkelemente.

6. Verfahren gemäß Anspruch 2, wobei die zugehörige Änderung, erkannt durch jedes Netzwerkelementsystem in dem optischen Transportnetzwerk, die Änderung des Leitungsalarms (610) oder die Änderung der empfangenen Protokollsignalisierung (635) bei der Empfangsrichtung eines optischen Anschlusses ist.

7. Verfahren gemäß Anspruch 2, wobei der Schritt des Durchführens des zu dem Ersatzweg zugehörigen Vorgangs ferner Folgendes beinhaltet:
Erkennen des Leitungsalarmzustands in der Empfangsrichtung jedes optischen Anschlusses in Echtzeit durch jedes Netzwerkelementsystem (605);
Durchführen von Vor-Querverbindung (620), wenn ein Netzwerkelementsystem eine Alarmänderung an einem optischen Anschluss (610) erkennt, und die Alarmänderung von keinem Alarm zu Alarm aufweisend (615) ist; Abbrechen des Ersatzwegs, wenn die Alarmänderung von Alarm aufweisend zu kein Alarm (625) ist.

8. Verfahren gemäß Anspruch 7, wobei der Schritt des Durchführens von Vor-Querverbindung ferner Folgendes beinhaltet:
Erhalten der gespeicherten Ersatzweginformationen durch das oben fehlgeschlagene Netzwerkelementsystem mit einem Alarm;
Erhalten von Informationen eines nächsten angrenzenden Netzwerkelements aus den obigen Ersatzweginformationen durch das fehlgeschlagene Netzwerkelementsystem;
Senden einer Protokollsignalisierung einschließlich einer Tabelle jeder Vor-Querverbindung-ID und ihrem entsprechenden Markierungsbit an das nächste Netzwerkelement durch das fehlgeschlagene Netzwerkelementsystem, um das nächste Netzwerkelement darüber zu informieren, die Vor-Querverbindung durchzuführen;
Durchführen des Schaltens durch das fehlgeschlagene Netzwerkelementsystem, wenn die Vor-Querverbindung zwischen dem fehlgeschlagenen Netzwerkelementsystem und dem nächsten Netzwerkelement gelingt.

9. Verfahren gemäß Anspruch 7, wobei der Schritt des Abbrechens des Ersatzwegs ferner Folgendes beinhaltet:
Erhalten der gespeicherten Ersatzweginformationen durch ein Wiederherstellungsnetzwerksystem mit dem erloschenen Alarm;
Erhalten von Informationen eines nächsten angrenzenden Netzwerkelements aus den Ersatzweginformationen durch das Wiederherstellungsnetzwerkelementsystem;
Senden einer Protokollsignalisierung einschließlich einer Tabelle jeder Vor-Querverbindung-ID und ihrem entsprechenden Markierungsbit an das nächste Netzwerkelement durch das Wiederherstellungsnetzwerkelementsystem, um das nächste Netzwerkelement darüber zu informieren, die Vor-Querverbindung abzubrechen;
Abbrechen des Schaltens durch das Wiederherstellungsnetzwerkelementsystem, nachdem die Vor-Querverbindung zwischen dem Wiederherstellungsnetzwerkelementsystem und dem nächsten Netzwerkelement gelingt.

10. Verfahren gemäß Anspruch 9, wobei der Schritt des Sendens der Protokollsignalisierung ferner Folgendes beinhaltet:
Festsetzen des Markierungsbits, das der Vor-Querverbindung-ID des nächsten Netzwerkelements in der Protokollsignalisierung als eine Marke des Abbrechens der Vor-Querverbindung durch das Wiederherstellungsnetzwerkelementsystem entspricht.

11. Verfahren gemäß Anspruch 2, wobei der Schritt des Durchführens des zu dem Ersatzweg zugehörigen Vorgangs ferner Folgendes beinhaltet:
Erkennen der Änderung einer Protokollsignalisierung, die an jedem optischen Anschluss durch jedes Netzwerkelementsystem (630) empfangen wird, in Echtzeit;
Durchführen von Vor-Querverbindung (640), wenn ein Netzwerkelementsystem eine Änderung der Protokollsignalisierung in einem der optischen Anschlüsse (635) erkennt, und die Änderung von keine Vor-Querverbindung-Markierung aufweisend bis eine Vor-Querverbindung-Markierung aufweisend ist; Abbrechen des Ersatzwegs (655), wenn die obige Alarmänderung von Vor-Querverbindung-Markierung aufweisend bis Abbrechen der Vor-Querverbindung-Markierung ist.

12. Verfahren gemäß Anspruch 11, wobei der Schritt des Durchführens von Vor-Querverbindung ferner Folgendes beinhaltet:
Erhalten ihrer gespeicherten Ersatzweginformationen durch das Netzwerkelementsystem mit Vor-Querverbindung-Markierung;
Erhalten von Informationen eines nächsten angrenzenden Netzwerkelements aus den Ersatzweginformationen durch das Netzwerkelementsystem;
Senden einer Protokollsignalisierung einschließlich einer Tabelle jeder Vor-Querverbindung-ID und ihrem entsprechenden Markierungsbit an das nächste Netzwerkelement, um es darüber zu informieren, Vor-Querverbindung durchzuführen, wenn das Netzwerkelementsystem nicht das Schlussnetzwerkelement des Ersatzwegs ist;
Festlegen der Vor-Querverbindung durch das Netzwerkelementsystem.

13. Verfahren gemäß Anspruch 11, wobei der Schritt des Abbrechens des Ersatzwegs ferner Folgendes beinhaltet:
Erhalten seiner gespeicherten Ersatzweginformationen durch das Netzwerkelementsystem ohne die Vor-Querverbindung-Markierung;
Erhalten von Informationen eines nächsten angrenzenden Netzwerkelements aus den Ersatzweginformationen durch das Netzwerkelementsystem;
Senden einer Protokollsignalisierung einschließlich einer Tabelle jeder Vor-Querverbindung-ID und ihrem entsprechenden Markierungsbit an das nächste Netzwerkelement durch das Netzwerkelementsystem, um es darüber zu informieren, die Vor-Querverbindung abzubrechen;
Abbrechen der Vor-Querverbindung durch das Netzwerkelementsystem.

14. Verfahren gemäß Anspruch 13, wobei der Schritt des Sendens der Protokollsignalisierung ferner Folgendes beinhaltet:
Festsetzen des Markierungsbits, das der Vor-Querverbindung-ID des nächsten Netzwerkelements in der Protokollsignalisierung als eine Marke des Abbrechens der Vor-Querverbindung durch das Wiederherstellungsnetzwerkelementsystem entspricht.

15. Verfahren gemäß einem der Ansprüche 2 bis 14, wobei das Verfahren ferner die folgenden Schritte beinhaltet:
Zuordnen von Transportwegen, wie etwa eigenem Overhead eines Transportnetzwerks, einen eingebetteten Weg oder ein spezielles Signalisierungsnetzwerk, für die Protokollsignalisierungen, die gemeinsam durch die Transportwege zwischen allen Netzwerkelementsystemen transportiert werden.

## Revendications

1. Un procédé de récupération dans un réseau de transport optique complexe, comprenant :
l'utilisation d'un système de fond pour prédéterminer une route de réserve pour un groupe de ressource de travail de chaque élément de réseau dans le réseau,
la mise à jour dynamique de la route de réserve de chaque élément de réseau sur la base d'une opération pratique du réseau, et
l'établissement de la route de réserve par le biais de signalisation entre des systèmes d'élément de réseau sur la route de réserve lorsqu'un défaut en ligne se produit.

2. Le procédé de la revendication 1, comprenant les étapes suivantes :
prédéterminer la route de réserve pour chaque élément de réseau dans le réseau de transport optique par ledit système de fond ;
faire passer les informations de route de réserve de chaque élément de réseau à chaque élément de réseau apparenté par ledit système de fond ;
détecter des conditions d'opération du réseau en temps réel et mettre à jour la route de réserve en temps réel par ledit système de fond ;
détecter un changement apparenté dans le réseau de transport optique en temps réel par chaque système d'éléments de réseau, et réaliser une opération associée à la route de réserve sur la base dudit changement.

3. Le procédé de la revendication 2, dans lequel ladite étape consistant à prédéterminer la route de réserve comprend en outre :
la division de ressource de travail de chaque port optique de chaque élément de réseau, tel que le trafic venant d'éléments de réseau adjacents et non adjacents, en groupe de ressource de travail différent par ledit système de fond (510) ;
la recherche de la route de réserve en utilisant un algorithme de routage, tel qu'un algorithme de Dijkstra, pour chaque groupe de ressource de travail divisé ci-dessus par ledit système de fond (515) ; s'il n'y a pas de route disponible, ajuster de la taille du groupe de ressource de travail, incluant la combinaison de deux WG ou plus en un, ou la division d'un WG en deux WG ou plus ;
la recherche de condition de ressource non assignée de chaque élément de réseau dans chaque route de réserve ci-dessus (520) et la détermination de chaque route de réserve pour récupérer chaque groupe de ressource de travail apparenté par ledit système de fond (525) ; si la ressource non assignée n'est pas suffisante, retourner à l'étape ci-dessus pour rechercher d'autres routes (515) ;
la réalisation d'une connexion pré-croisée par chaque élément de réseau dans chaque route de réserve déterminée ci-dessus, incluant l'assignation d'une ID pour ladite connexion pré-croisée (530) et le fait de faire passer l'ID à chaque élément de réseau associé (540).

4. Le procédé de la revendication 3, dans lequel ladite étape de recherche de ressource non assignée comprend en outre :
la formation de la ressource non assignée de chaque élément de réseau dans chaque route de réserve en un groupe de protection par ledit système de fond (525), et le fait de faire passer des informations de distribution du groupe de ressource de travail et du groupe de protection de chaque élément de réseau à l'élément de réseau associé (540).

5. Le procédé de la revendication 2, dans lequel ladite étape de détection en temps réel comprend en outre :
la détection d'une condition d'opération du réseau en temps réel par ledit système de fond (545), lorsqu'un changement est détecté, lequel peut être obtenu d'un système de gestion de réseau, tel que l'augmentation ou la diminution des éléments de réseau dans le réseau, l'augmentation ou la diminution ou la modification de connexions ou de configuration de trafic parmi les éléments de réseau, des fautes de la ligne optique, la redétermination de la route de réserve de chaque élément de réseau et le fait de les faire passer aux éléments de réseau associés.

6. Le procédé de la revendication 2, dans lequel le changement associé détecté par chaque dit système d'éléments de réseau dans le réseau de transport optique est le changement d'alarme de ligne (610) ou le changement de signalisation de protocole reçue (635) lors de la réception de direction d'un port optique.

7. Le procédé de la revendication 2, dans lequel ladite étape consistant à réaliser une opération associée à la route de réserve comprend en outre :
la détection d'une condition d'alarme de ligne lors de la réception de direction de chaque port optique en temps réel par chaque système d'éléments de réseau (605) ;
la réalisation d'une connexion pré-croisée (620) lorsqu'un système d'éléments de réseau détecte un changement d'alarme au niveau d'un port optique (610), et le changement d'alarme va d'aucune alarme à une alarme (615) ; l'annulation de la route de réserve si le changement d'alarme va d'une alarme à aucune alarme (625).

8. Le procédé de la revendication 7, dans lequel ladite étape consistant à réaliser une connexion pré-croisée comprend en outre :
l'obtention des informations de route de réserve stockées par le système d'éléments échoué ci-dessus avec une alarme ;
le recueil d'informations d'un élément de réseau adjacent suivant à partir des informations de route de réserve ci-dessus par ledit système d'éléments de réseau échoué ;
l'envoi d'une signalisation de protocole incluant un tableau de chaque ID de connexion pré-croisée et son bit indicateur correspondant audit élément de réseau suivant par ledit système d'éléments de réseau échoué, de façon à informer ledit élément de réseau suivant de réaliser la connexion pré-croisée ;
la réalisation d'une commutation par ledit système d'éléments de réseau échoué si la connexion pré-croisée entre le système d'éléments de réseau échoué et ledit élément de réseau suivant réussit.

9. Le procédé de la revendication 7, dans lequel ladite étape consistant à annuler la route de réserve comprend en outre :
l'obtention des informations de route de réserve stockées par un système d'éléments de réseau de récupération, l'alarme ayant disparu de celui-ci ;
l'obtention d'informations d'un élément de réseau adjacent suivant à partir des informations de route de réserve par le système d'éléments de réseau de récupération ; l'envoi d'une signalisation de protocole incluant un tableau de chaque ID de connexion pré-croisée et son bit indicateur correspondant audit élément de réseau suivant par le système d'éléments de réseau de récupération, de façon à informer ledit élément de réseau suivant d'annuler la connexion pré-croisée ;
l'annulation de la commutation par le système d'éléments de réseau de récupération après que la connexion pré-croisée entre le système d'éléments de réseau de récupération et ledit élément de réseau suivant a réussi.

10. Le procédé de la revendication 9, dans lequel ladite étape consistant à envoyer la signalisation de protocole comprend en outre :
l'établissement de l'indicateur de bit correspondant à l'ID de connexion pré-croisée dudit élément de réseau suivant dans ladite signalisation de protocole comme marque d'annulation de la connexion pré-croisée par ledit système d'éléments de réseau de récupération.

11. Le procédé de la revendication 2, dans lequel ladite étape consistant à réaliser une opération associée à la route de réserve comprend en outre :
la détection en temps réel de changement d'une signalisation de protocole reçue au niveau de chaque port optique par chaque système d'éléments de réseau (630) ;
la réalisation d'une connexion pré-croisée (640) lorsqu'un système d'éléments de réseau détecte un changement de la signalisation de protocole dans l'un des ports optiques (635), et le changement va d'aucune indication de connexion pré-croisée à une indication de connexion pré-croisée ; l'annulation de la route de réserve (655) si le changement d'alarme ci-dessus va d'une indication de connexion pré-croisée à l'annulation de l'indication de connexion pré-croisée.

12. Le procédé de la revendication 11, dans lequel ladite étape consistant à réaliser une connexion pré-croisée comprend en outre :
l'obtention de ses informations de route de réserve stockées par ledit système d'éléments de réseau ayant une indication de connexion pré-croisée ;
l'obtention d'informations d'un élément de réseau adjacent suivant à partir des informations de route de réserve par le système d'éléments de réseau ;
l'envoi d'une signalisation de protocole incluant un tableau de chaque ID de connexion pré-croisée et son bit indicateur correspondant audit élément de réseau suivant pour l'informer de réaliser une connexion pré-croisée lorsque le système d'éléments de réseau n'est pas l'élément de réseau d'extrémité de la route de réserve ;
l'établissement de la connexion pré-croisée par le système d'éléments de réseau.

13. Le procédé de la revendication 11, dans lequel ladite étape consistant à annuler la route de réserve comprend en outre :
l'obtention de ses informations de route de réserve stockées par le système d'éléments de réseau, l'indication de connexion pré-croisée ayant disparu de celui-ci ;
l'obtention d'informations d'un élément de réseau adjacent suivant à partir des informations de route de réserve par le système d'éléments de réseau ;
l'envoi d'une signalisation de protocole incluant un tableau de chaque ID de connexion pré-croisée et son bit indicateur correspondant à l'élément de réseau suivant pour l'informer d'annuler la connexion pré-croisée par le système d'éléments de réseau ;
l'annulation de la connexion pré-croisée par le système d'éléments de réseau.

14. Le procédé de la revendication 13, dans lequel ladite étape consistant à envoyer la signalisation de protocole comprend en outre :
l'établissement de l'indicateur de bit correspondant à l'ID de connexion pré-croisée de l'élément de réseau suivant dans la signalisation de protocole comme marque d'annulation de la connexion pré-croisée par le système d'éléments de réseau.

15. Le procédé de n'importe quelle revendication parmi les revendications 2 à 14, le procédé comprenant en outre :
l'assignation de routes de transport, telles que surcharge inhérente d'un réseau de transport, une route intégrée ou un réseau de signalisation spécial, pour les signalisations de protocole qui sont transportées ensemble par le biais desdites routes de transport entre tous les systèmes d'élément de réseau.
